# EUROPEAN PATENT SPECIFICATION

(11) **EP 2 612 487 B1**
(45) Date of publication and mention of the grant of the patent: **22.01.2020**
(21) Application number: 10856780.1
(22) Date of filing: 31.08.2010
(51) Int. Cl.: H04L 29/08

(54) **METHOD AND ARRANGEMENT IN A PEER-TO-PEER NETWORK**
VERFAHREN UND ANORDNUNG IN EINEM PEER-TO-PEER-NETZWERK
PROCÉDÉ ET AGENCEMENT DANS UN RÉSEAU POSTE À POSTE

(43) Date of publication of application: 10.07.2013
(73) Proprietor: Telefonaktiebolaget LM Ericsson (publ), 164 83 Stockholm (SE)
(72) Inventor: HJELM, Johan, S-165-0025 Tokyo (SE); LIDSTRÖM, Mattias, S-112 24 Stockholm (SE); MATTI, Mona, Stockholm 131 40 (SE)
(74) Representative: Brann AB
(86) International application number: PCT/SE2010/050926
(87) International publication number: WO 2012/030259

(56) References cited:
- EP-A1- 1 821 487
- EP-A1- 2 058 980
- WO-A1-2010/063314
- WO-A1-2010/064965
- WO-A2-2008/115221
- US-A1- 2009 182 815
- G. CAMARILLO: 'Peer-to-Peer (P2P) Architecture: Definition, Taxonomies, Examples, and Applicability' REQUEST FOR COMMENTS: 5694, CATEGORY: INFORMATIONAL November 2009, XP015068112

## Description

### Technical field

The invention relates generally to a method and arrangement for enrolling a joining peer to a peer-to-peer network.

### Background

Various services have been developed involving packet-based communication using IP (Internet Protocol), typically involving transmission of media and messages between communication nodes such as fixed or mobile telephones, computers and servers. For example, a media session according to a requested IP service is typically established for a user terminal, acting as "client", by means of an application or service node, acting as "server". The application or service function may be implemented in a central service node or application server, e.g. belonging to an IMS (IP Multimedia Subsystem) network.

IP communication sessions can also be established and handled solely by user terminals without involving any intermediate central service node, thus forming a peer-to-peer (P2P) network with participating peers, e.g. for sharing processing and/ or storing resources with the purpose of performing a certain task or function. Some examples of P2P networks are distributed databases, calculation and processing of data, any so-called "cloud services", delivery of distributed media content such as films or music, electronic games, distributed search engines, and so forth. This type of "virtual" network is sometimes referred to as an "overlay P2P network" and can be formed on a more or less temporary basis involving any selection of peers, such as the nodes exemplified above, being connected to various networks for IP communication.

Basically, a P2P network does not distinguish between clients or servers but comprise only equal peer nodes that simultaneously can act as both clients and servers. This model of network arrangement thus differs from the client-server model above where the communication is controlled by some central server. In a P2P session, media and messages are transmitted in data packets directly between the peers and the data packets are routed through an IP network, e.g. the Internet, over various routers having their own mechanisms for handling different data flows. However, the routers are typically not concerned with what media or messages the packets contain and can be considered transparent in this context, and the peers must therefore negotiate and agree on various communication parameters depending on their capabilities.

P2P applications on the Internet are becoming increasingly popular, e.g. for utilising resources in multiple nodes and for downloading content such as music and films. In the latter case, a technique referred to as "Bit Torrent" is a very powerful distribution mechanism that can be used for rapid sharing of content and computer programs over the Internet without requiring a traditional centralized content server. After obtaining a list of peers of a content distributed P2P network, an outside client can download different parts of some requested content simultaneously from the peers in the list and form the complete content therefrom for playout Furthermore, so-called Distributed Hash Tables, DHT:s, are typically used for identifying the peers for downloading.

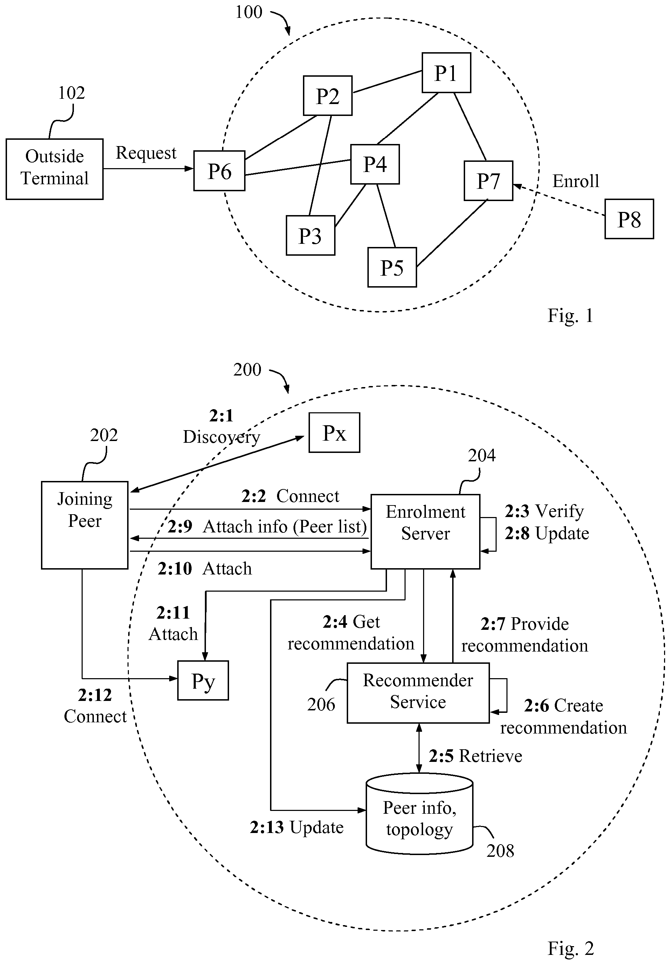

In an overlay P2P network, the participating peers are connected to one another according to a certain network topology and may have differentiated capabilities that can be utilised in one way or another for contributing to the general function or task to be performed by the P2P network. For example, one peer may have a very powerful processor while another peer may have great storage capacity. Fig. 1 illustrates an example of how the topology of an overlay P2P network 100 might be configured, where a plurality of peers P1-P7 are connected according to a specific pattern. One peer P6 may be assigned to work as a point of contact for outside terminals 102 for receiving service requests or queries, e.g. directed to a particular URL (Universal Resource locator) address associated to peer P6.

During the lifetime of P2P network 100, peers may join or leave the network such that the overall topology is changed. Adding a joining peer to the P2P network can be referred to as "enrolment" of the peer. In Fig. 1, a new peer P8 is enrolled as it connects to one of the existing peers P7. As a result, peer P8 will be connected to P7 in the new topology as illustrated. However, it is a drawback that this position in the network may be less than optimal and even impractical when considering the capabilities and current status of peer P8 in relation to what is wanted or needed from the new peer P8 to functionally contribute to the P2P network 100.

DHTs may be used in a P2P network for publication and discovery of different resources therein, i.e. capabilities and content in the participating peers. The existing store and lookup functions of the DHT mechanism may thus be used for discovery. The peers can also be allocated keywords representing its resources, which implies that the keywords of available resources must be distributed among the peers in the network such that each peer stores a distributed index of keywords. For example, the existing overlay algorithm called "Chord" requires that each peer has a so-called "finger" table and a neighbor table with such resource keywords.

It is therefore another drawback that the tables and indices must be updated in all peers whenever the network topology is changed, i.e. when peers join or leave the overlay network. Yet another drawback when a peer is enrolled to a certain spot and a certain role in an overlay P2P network according to current known procedures, is that its position and role in the topology may not be very suitable with respect to its current situation, status, resources and/ or capabilities. It is also difficult to employ load balancing amongst the peers for handling incoming requests. US 2009/182815 A1 describes a system for acceleration of peer-to-peer download of content files in a swarm. WO 2008/115221 A2 describes a method of handling a new peer join in a system. EP 1 821 487 A1 describes a method to shape a peer to peer cloud network by a tracker node. However, there still remains a need to optimize enrolment of new peers in a P2P network in order to contribute to the overall function of the P2P network in a fitting or even optimal manner.

### Summary

It is an object of the invention to address at least some of the problems and issues outlined above. It is also an object to provide a useful mechanism for enrolling a peer to an existing P2P network in an appropriate manner, e.g. to a proper position and/ or role in the network. It is possible to achieve these objects and others by using a method and an arrangement as defined in the attached independent claims.

The above method and arrangement may be configured and implemented according to different embodiments. In some possible embodiments, the enrolment recommendation is further based on qualifications of the joining peer including at least one of: current context, capabilities and current status of the joining peer. The enrolment recommendation may be further based on at least one of: current roles and/ or qualifications of other peers in the P2P network, load balancing, connection costs, latency, and enrolment history and social network information regarding the joining peer.

In further possible embodiments, the enrolment recommendation may indicate one or more admitting peers to which the joining peer shall be connected in the P2P network, and may also indicate a bootstrap peer in the P2P network which handles an attach procedure for the joining peer when connecting to the admitting peer(s) by relaying attach messages. The enrolment recommendation may further indicate a role the joining peer shall have in the P2P network, the role involving one or more processing and/ or storing tasks. In that case, the enrolment server further sends configuration information to the joining peer indicating that role. The enrolment recommendation may also indicate one or more index keywords to be assigned to the joining peer for use in service requests or queries to the P2P network from outside parties.

The enrolment server may also at some point receive a leave request from a peer in the P2P network, indicating that this peer is leaving the P2P network, and the enrolment server then updates the stored topology of the P2P network accordingly.

Further possible features and benefits of this solution will become apparent from the detailed description below.

### Brief description of drawings

The invention will now be described in more detail by means of exemplary embodiments and with reference to the accompanying drawings, in which:
Fig. 1 is a block diagram illustrating a typical example P2P network, according to the prior art
Fig. 2 is a block diagram illustrating a procedure and arrangement for enrolling a joining peer to a P2P network, according to an example embodiment.
Fig. 3 is a flow chart with actions performed by an enrolment server for enrolling a joining peer, according to further example embodiments.
Fig. 4 is a block diagram illustrating in more detail a arrangement in an enrolment server, according to another example embodiment
Fig. 5 is a signalling diagram illustrating a practical example of how a joining peer can be enrolled to a P2P network, according to further possible embodiments.

### Detailed description

Briefly described, a solution is provided to obtain a fitting enrolment of a joining peer to a P2P network, e.g. in terms of position, function and role of the joining peer in the P2P network. This can be accomplished by employing an enrolment function implemented in an enrolment server associated to the P2P network, e.g. as implemented in one of the peers therein. The enrolment server obtains an enrolment recommendation for the joining peer at least based on the current topology of the network and optionally also based on certain qualifications of the joining peer. For example, these qualifications may relate to the current context, capabilities and/ or current status of the joining peer. The enrolment recommendation may be created by means of a recommender service which could be implemented either in the same node as the enrolment server itself or in another node in the P2P network.

The obtained enrolment recommendation may refer to a suitable or fitting network position for the joining peer, i.e. specifying one or more peers in the P2P network the joining peer shall be connected to, in the following description also referred to as "admitting" peer(s). The enrolment recommendation may also refer to a specific role or function the joining peer shall have in the network, i.e. which task(s) or operation(s) are required to be performed in order to contribute to the overall function of the P2P network in a fitting or even optimal manner. For example, the joining peer may be appointed to store a certain type and/ or amount of data if the P2P network has the overall function of a distributed database. The role may thus involve one or more storing and/ or processing tasks.

The enrolment recommendation may further refer to a so-called "bootstrap peer" in the P2P network which handles the attach procedure for the joining peer when connecting to the admitting peer(s). The bootstrap peer may be the enrolment server itself or another peer node in the P2P network. The enrolment server sends attach information to the joining peer according to the enrolment recommendation, indicating where the joining peer shall connect to the P2P network. The enrolment server may further send configuration information to the joining peer indicating its future role in the P2P network.

Once the joining peer has connected to one or more admitting peers and has thus joined the P2P network according to the enrolment recommendation and sent attach information, the enrolment peer updates the current topology and configuration of the P2P network accordingly, which may be maintained in a database or the like e.g. implemented in one of the network's peers or in an external node.

An example of how a joining peer can be enrolled to a P2P network in accordance with this solution, will now be described with reference to Fig. 2. It is assumed that the schematically shown P2P network 200 involves a plurality of peers connected to one another according to a certain network topology, not shown here but the topology may be similar to that shown in Fig. 1, without limitation thereto. It is also assumed that the P2P network 200 has been formed in order to fulfill some function or task requiring various resources in the peers which may have differentiated capabilities and contribute in different or equal ways to the general function or task, as in the network of Fig. 1.

An outside peer 202 will now join the network 200, which can be accomplished in a fitting manner as follows, the peer 202 being hereafter accordingly referred to as a joining peer. A first **action 2:1** illustrates that the joining peer 202 initially contacts one of the peers in the network, denoted "Px", and performs a regular discovery process with peer Px. The peer Px may act as a point of contact for outside parties to the P2P network 200, e.g. for receiving service requests and queries directed to a public URL address of Px, or may in another way be known to peer 202. In the discovery process, peer Px directs the joining peer 202 to contact an enrolment server 204 to proceed with the enrolment to network 200. The enrolment server 204 maybe implemented in one of the peers of the P2P network 200 which may or may notbe the same peer as the one Px acting as a point of contact for external parties.

In a next **action 2:2,** the joining peer 202 accordingly sends a connect request to enrolment server 204. The connect request is effectively a request for joining the P2P network 200 in order to contribute to its function or task with new resources in a suitable manner. Without limitation, the function or purpose of P2P network 200 could be anything that can be realized with such a network, which was exemplified in the background section above, and the invention is thus not limited in this respect The invention is neither limited to any particular resources in the joining peer 202 that will be utilised once it has joined the network 200. As mentioned above, such resources may be related to one or more of processing and storing capabilities as well as stored content or data and installed applications in the peer 202.

In this action, the joining peer 202 also sends information on its available resources and may also send information on its current context and/ or terminal status to the enrolment server 204. The context may relate to geographic position, physical environment and characteristics of the peer's current access network, e.g. in terms of traffic class, available bandwidth and latency. The terminal status may relate to a current mode of operation, any activated call forwarding, etc.

After receiving the connect request from peer 202, the enrolment server 204 checks basically if the peer is authorised to join the P2P network 200, in a following **action 2:3,** e.g. by means of an internal process or by contacting some external credential server or the like, not shown, that can verify the peer 202 by authentication based on credentials stored for the peer. The verification procedure itself is somewhat outside the scope of this solution and is not necessary to describe here to understand the invention.

The enrolment server 204 then generally obtains an enrolment recommendation for the joining peer 202, in this example by triggering the recommendation from a recommender service 206 in an **action 2:4.** In practice, the recommender service 206 may be implemented in the same node or peer as the enrolment server 204, or in any other node or peer of the network 200, while it is schematically shown as a separate functional unit in Fig. 2. It is assumed that the above information on resources and current context and/ or status of peer 202, if received therefrom, is made available to the recommender service 206.

The recommender service 206 retrieves information on the current topology of the P2P network 200, in a further **action 2:5,** which is maintained in a database 208 associated to the network 200. The network topology thus basically refers to how the peers in network 200 are connected to one another. The recommender service 206 may also retrieve, from database 208, information on the other peers in the P2P network, such as their current roles in the network and/ or qualifications, which together with the network topology accordingly make up the configuration of P2P network 200.

In a next **action 2:6,** recommender service 206 creates an enrolment recommendation for the joining peer 202, at least based on the retrieved topology information and optionally also based on qualifications of the joining peer including at least one of: its current context, capabilities and current status. The creation of the enrolment recommendation may be further based on at least one of: current roles and/ or qualifications of other peers in the P2P network 200, load balancing, connection costs, latency, enrolment history and social network information regarding the joining peer.

The current roles and/ or qualifications of other peers may be extracted from the information retrieved in action 2:5 above. The load balancing aspect refers to the distribution or allocation of tasks among the peers to even out their load and/ or to utilise their resources in an effective or even optimal manner. The connection costs refer to access and transport costs for communicating data and messages to/ from the individual peers in the network 200, and the total connection costs for the network should naturally be kept low. The latency refers to any resulting delays when communicating data and messages to/ from the individual peers which may be important for certain services. The enrolment history refers to any previous enrolment(s) of the peer 202 to network 200 or to other P2P networks and which role it had then, and any previous recommendations made for peer 202 can be used as input data. The social network information mainly refers to the physical or topological closeness, i.e. proximity, of the joining peer to other peers in the network. A social graph may be maintained in database 208 representing such information.

According to different possible options, the created enrolment recommendation may indicate a position the joining peer shall have in the P2P network, i.e. one or more other peer(s) to which it shall be directly connected in the P2P network, in the following referred to as "admitting peers", implying a new topology. The enrolment recommendation may further indicate a role the joining peer shall have in the P2P network, e.g. involving one or more processing and/ or storing tasks.

In order to create a fitting enrolment recommendation for the joining peer 202, different candidate network positions and roles for the joining peer 202 may be tried out, e.g. by calculating the performance of the resulting network topology and configuration for each candidate position/ role in terms of efficiency, costs and load distribution. The recommendation may also comprise multiple alternatives of network positions and roles for the joining peer 202 with different resulting levels of performance, as calculated.

In Fig. 2, recommender service 206 basically provides the created enrolment recommendation to the enrolment server 204, in a further **action 2:7,** e.g. indicating the most efficient network position connecting to one or more admitting peers and a suitable role for the joining peer 202, or multiple alternative positions/ roles as described above. The enrolment server 204 then updates the configuration of network 200 with the new peer 202, that is, according to the enrolment recommendation or a selected alternative thereof, in a following **action 2:8.**

As in prior P2P networks discussed above, the configuration of network 200 may be neatly defined by means of one or more index keywords assigned to each peer in the network 200, indicating available resources and/ or other characteristics of the respective peers. The index keywords may be organized in any manner, e.g. in multiple hierarchical levels of a tree structure, and can be used in service requests or queries to the P2P network from outside parties. In this invention, it is a great advantage that it is not necessary to maintain updated indices of keywords in the individual peers as they can be more efficiently maintained by the enrolment server 204 instead. Thus, there is no need to distribute such indices of keywords amongst the peers, thereby saving much processing and communication costs.

If such index keywords are employed in the P2P network 200, the enrolment recommendation in the above actions 2:6, 2:7 may further indicate one or more index keywords to be assigned to the joining peer 202, and the enrolment server 204 updates the configuration of network 200 with the new index keyword(s) of peer 202 in action 2:8.

In a next **action 2:9,** the enrolment server 204 sends so-called "attach information" to the joining peer 202 according to the enrolment recommendation in response to the connect request The attach information basically indicates where the joining peer shall connect to the P2P network, e.g. identifying the one or more admitting peers to which the joining peer 202 shall be connected in the P2P network, which could be indicated in a peer list Alternatively or additionally, the attach information may indicate one or more bootstrap peers in the P2P network assigned to handle an attach procedure for any joining peer when connecting to the admitting peer(s), by relaying attach messages between the joining peer and the admitting peer(s). In this example, one admitting peer "Py" is shown. Further, the enrolment server 204 will act as a bootstrap peer in this example and will thus handle the attach procedure for peer 202.

Unless the user of peer 202 decides to refrain from joining network 200 at this point, the joining peer 202 performs a regular attach dialogue with the assigned bootstrap peer, i.e. enrolment server 204, in a following **action 2:10,** typically involving an attach request from peer 202 and an attach response from server 204. This attach procedure may be executed automatically without requiring any manual actions from the user. A further **action 2:11** illustrates that enrolment server 204 relays the attach dialogue to the admitting peer Py. Finally, after the attach procedure has been completed, the joining peer connects directly to the admitting peer Py in an **action 2:12,** and the bootstrap peer/ enrolment server 204 accordingly updates the network topology and configuration maintained in database 208, in a last shown **action 2:13.** It should be noted that the joining peer may in this way connect to more than one admitting peer, and the above attach procedure of actions 2:10 - 2:12 may in that case be valid for each admitting peer.

In this way, the enrolment server 204 and the recommender service 206 can provide a suitable and fitting, if not optimal, position and role for the joining peer 202 by taking at least the current network topology and optionally also qualifications of the joining peer and of the other peers into consideration. For example, a fitting position and role to be recommended for the joining peer 202 can be calculated in view of optimizing the overall network performance, as described above.

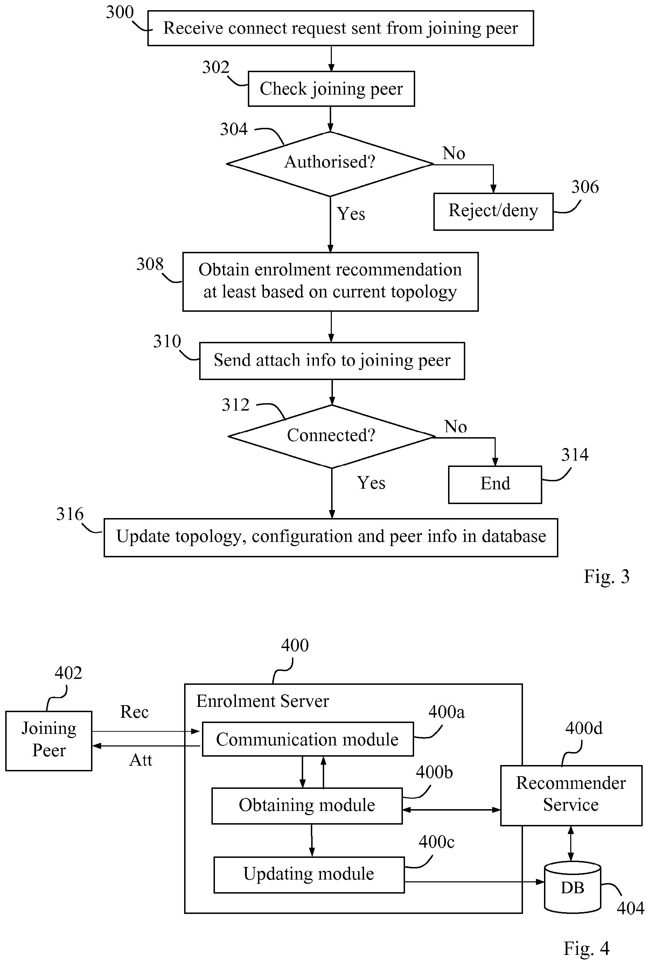

A procedure will now be described, with reference to the flow chart in Fig. 3, of enrolling a joining peer to a P2P network, which involves different actions executed by an enrolment server associated to the P2P network. This procedure may thus basically be realised by means of the enrolment server 204 and the recommender service 206 of Fig. 2. The P2P network may be an already existing network, or the procedure below may be part of forming the network

In a first **action 300,** the enrolment server receives a connect request sent from the joining peer, basically corresponding to action 2:2 above, which preferably also contains information on the peer such as its qualifications and/ or context The enrolment server then checks credentials or the like of the joining peer to see if the peer is authorised to join the P2P network 200, in a following **action 302,** basically corresponding to action 2:3 above. A next determining **action 304** illustrates that if the joining peer is not authorised, the connect request is rejected and the peer is denied to join in an **action 306,** while if the peer is authorised the enrolment server obtains an enrolment recommendation for the joining peer in an alternative **action 308.** The enrolment recommendation can be created by using information on the network topology and optionally also on network peers, the information being maintained in a database such as the database 208 of Fig. 2.

As described in the example of Fig. 2, the enrolment recommendation is at leastbased on the P2P network topology and optionally also based on qualifications of the joining peer. The enrolment recommendation may be further based on any of: current roles and/ or qualifications of other peers in the P2P network, load balancing, connection costs, latency, enrolment history and social network information regarding the joining peer. The peer qualifications above basically indicate how each peer can work and contribute to the P2P network, and could suitably include at least one of: current context, capabilities and current status of the respective peers. Action 308 of obtaining the enrolment recommendation basically corresponds to actions 2:4 - 2:7 above.

In a further **action 310,** the enrolment server sends attach information to the joining peer according to the enrolment recommendation and in response to the connect request The attach information thus indicates basically where/ how the joining peer shall connect to the P2P network, and may include the address of one or more admitting peers or one or more bootstrap peers, as explained above for action 2:9. The next **action 312** illustrates determination of whether the joining peer has actually joined the P2P network and is thus connected thereto. If not, the process may simply end in an **action 314.** Otherwise, the network topology and configuration has accordingly changed by addition of the joining peer as dictated by the enrolment recommendation, and a final **action 316** illustrates that the enrolment server updates the information on the topology and participating peers maintained in the database, basically corresponding to action 2:13 above.

With reference to the block diagram in Fig. 4, an arrangement in an enrolment server 400 of a P2P network, configured to enroll a joining peer 402 to the P2P network, will now be described. This arrangement may be implemented as an application in the enrolment server. The enrolment server 400 can be configured to basically operate according to any of the examples described above for Fig's 2 and 3, whenever appropriate. According to this arrangement, the enrolment server 400 comprises a **communication module 400a** adapted to receive a connect request "Req" sent from the joining peer.

Enrolment server 400 also comprises an **obtaining module 400b** adapted to obtain an enrolment recommendation for the joining peer 402 atleast based on a current topology of the P2P network being stored in a database 404. Enrolment server 400 also comprises an **updating module 400c** adapted to update the stored topology of the P2P network when the joining peer 402 has connected to the P2P network. The communication module 400a is further adapted to send attach information "Att" to the joining peer according to the enrolment recommendation in response to the connect request, the attach information indicating how the joining peer shall connect to the P2P network.

The different modules in the enrolment server 400 may be configured and adapted to provide further optional features and embodiments. In one example embodiment, the enrolment server 400 also comprises a **recommender service 400d** adapted to create the enrolment recommendation, e.g. in the manner described above for actions 2:5, 2:6 and 308, respectively.

In further possible embodiments, the created enrolment recommendation obtained by module 400b can be further based on qualifications of the joining peer 402 including at least one of: current context, capabilities and current status of the joining peer. The enrolment recommendation can be further based on at least one of: current roles and/ or qualifications of other peers in the P2P network, load balancing, connection costs, latency, enrolment history and social network information regarding the joining peer 402.

In more detail according to further embodiments, the attach information Att may indicate a bootstrap peer in the P2P network which handles the attach procedure for the joining peer 402 when connecting to the admitting peer(s) by relaying attach messages. As in the above examples, the enrolment server 400 may also act as the bootstrap peer. The enrolment recommendation may indicate one or more admitting peers to which the joining peer shall be connected in the P2P network, and also which role the joining peer shall have in the P2P network in terms of one or more processing and/ or storing tasks. The communication module 400a may thus be further adapted to send configuration information to the joining peer indicating that role.

The enrolment recommendation may further indicate one or more index keywords to be assigned to the joining peer, which keywords can be used in any service requests or queries to the P2P network made from outside parties. The enrolment server could also, at some point during the lifetime of the P2P network, receive a leave request from a peer in the P2P network, indicating that this peer is leaving the P2P network, i.e. disconnecting therefrom, and updates the stored topology of the P2P network accordingly.

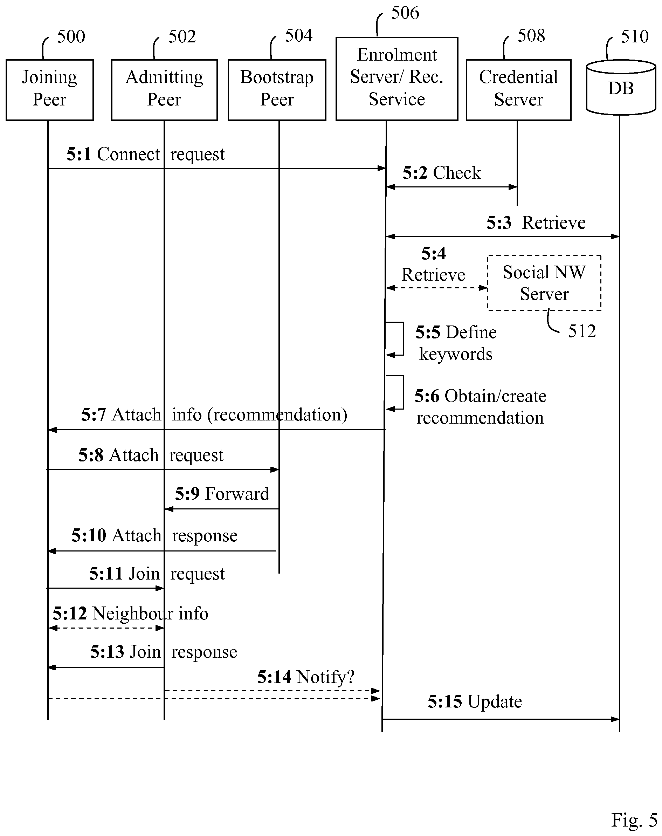

It should be noted that Fig. 4 merely illustrates various functional modules or units in the enrolment server 400 in a logical sense, although the skilled person is free to implement these functions in practice using suitable software and hardware means. Thus, the invention is generally not limited to the shown structures of the enrolment server 400, while its functional modules 400a-d may be configured to operate according to the features described for Fig's 2 and 3 above and Fig. 5 below, where appropriate.

The functional modules 400a-d described above can be implemented in the enrolment server 400 as program modules of a computer program comprising code means which when run by a processor in the server 400 causes the server 400 to perform the above-described functions and actions. The processor may be a single CPU (Central processing unit), or could comprise two or more processing units. For example, the processor may include general purpose microprocessors, instruction set processors and/ or related chips sets and/ or special purpose microprocessors such as ASICs (Application Specific Integrated Circuit). The processor may also comprise board memory for caching purposes.

The computer program may be carried by a computer program product in the server 400 connected to the processor. The computer program product comprises a computer readable medium on which the computer program is stored. For example, the computer program product may be a flash memory, a RAM (Random-access memory), a ROM (Read-Only Memory) or an EEPROM (Electrically Erasable Programmable ROM), and the program modules could in alternative embodiments be distributed on different computer program products in the form of memories within the enrolment server 400.

A practical example procedure of how a joining peer can be enrolled to a P2P network will now be described with reference to the signalling diagram of Fig. 5. This procedure thus involves a joining peer 500, an admitting peer 502, a bootstrap peer 504, an enrolment server 506 in which a recommender service is implemented, a credential server 508, and a database 510 in which a network topology and configurations of the network and participating peers are maintained. In this example, the bootstrap peer 504 is a node different from the enrolment server 506 while these two functions were put together in the same node in the previous example of Fig. 2.

Assuming that the joining peer 500 has already made contact to the P2P network and performed a regular discovery process as described for action 2.1 above, a connect request is transmitted from the joining peer 500 to the enrolment server 506, in a first shown **action 5:1,** the request preferably also containing on the peer 500 such as its qualifications and/ or context The enrolment server 506 checks with the credential server 508 if the joining peer 500 is authorised to join the network, in an **action 5:2.** Assuming that this is indeed the case, enrolment server 506 continues with retrieving from database 510 a current network topology and information on the other peers in the P2P network such as their roles and qualifications, thus implying the configuration of the network, in a further **action 5:3.** The enrolment server 506 may also retrieve social network information regarding the joining peer from a specific social network server 512 indicating its proximity to other peers, which is shown by an optional **action 5:4.**

In a next **action 5:5,** enrolment server 506 also defines one or more recommended index keywords to be assigned to the joining peer 500, thus indicating available resources and/ or other characteristics of the peer 500 which may be used in service requests or queries to the P2P network from outside parties. The enrolment server 506 then creates, i.e. obtains, an enrolment recommendation for the joining peer 500, in a further **action 5:6,** on the basis of the information retrieved in action 5:4 and the information on peer 500 received therefrom in action 5:1. The enrolment recommendation indicates the admitting peer 502 to which the joining peer 500 shall be connected in the P2P network, and further indicates which role the joining peer 500 shall have in the P2P network involving one or more processing and/ or storing tasks. The enrolment recommendation further indicates the bootstrap peer 504 and the index keywords defined in action 5:5.

In a next **action 5:7,** enrolment server 506 sends attach information to the joining peer 500 indicating a configuration according to the enrolment recommendation, i.e. where/ how peer 500 shall connect to the P2P network, in response to the connect request of action 5:1. Accordingly, the attach information identifies in this example the bootstrap peer 504 which has been assigned to handle an attach procedure for the joining peer 500 when connecting to the admitting peer 502, as follows. The attach information may also identify the admitting peer 502 to which the joining peer 500 shall be connected in the new network topology.

In keeping with the received attach information, the joining peer 500 now sends an attach request to the bootstrap peer 504, in a following **action 5:8.** The bootstrap peer 504 then forwards the attach request to the admitting peer 502, in a next **action 5:9,** and also sends an attach response to the joining peer 500, in a further **action 5:10.** If not already identified in the attach information of action 5:7, the admitting peer is identified in the attach response. Thereby, the joining peer 500 is able to connect to the admitting peer 502 as of the recommended topology position and accordingly sends a join request thereto in an **action 5:11.**

In the connect procedure, the joining peer 500 and the admitting peer 502 may exchange information on their respective neighbors in the network, in a further **action 5:12.** The connect procedure is completed by the admitting peer 502 sending a join response to the joining peer 500, in another **action 5:13.** The joining peer 500 or the admitting peer 502 may also notify the enrolment server 506 that connection of the joining peer 500 to the P2P network has been completed, as indicated by dashed arrows in another **action 5:14.** Finally, the enrolment server 506 updates the network topology and information on participating peers maintained in the database 510 with the joining peer 500 having connected to the P2P network, in another **action 5:15.**

At some point during the lifetime of the P2P network, the enrolment server 506 may receive a leave request from any peer in the network, indicating that this peer is leaving the P2P network, not shown in this figure. The enrolment server 506 will then remove the leaving peer and update the stored topology of the P2P network accordingly.

By using this solution e.g. according to any of the embodiments described above, the enrolment of new peers to a P2P network can be made more efficient or even optimal since at least the network topology and preferably also peer qualifications and current configurations are taken into consideration when defining a fitting network position and role for each new peer. The enrolment process will also impact the ongoing performance of the network as little as possible. For example, any other existing procedures and mechanisms for operating a regular P2P network can basically be used without being impacted by the inventive enrolment process.

While the invention has been described with reference to specific exemplary embodiments, the description is generally only intended to illustrate the inventive concept and should notbe taken as limiting the scope of the invention. For example, the terms "peer", "P2P network", "enrolment server", "admitting peer", "bootstrap peer", "network topology and "index keywords" have been used throughout this description, although any other corresponding functions, parameters, nodes and/ or units could also be used having the functionalities and characteristics described here. The invention is defined by the appended claims.

## Claims

1. A method of enrolling a joining peer (202, 402, 500) to a peer-to-peer, P2P, network (200), the method comprising the following actions executed by an enrolment server (204, 400, 506) associated to the P2P network (200):
- receiving (2:2, 300) a connect request sent from the joining peer (202, 402, 500),
- calculating a level of performance, of a resulting topology and a configuration of the P2P network (200), for different roles for the joining peer (202, 402, 500),
- creating (2:6, 5:6) an enrolment recommendation for the joining peer (202, 402, 500) based on the calculation,
- obtaining (2:4-2:7, 308) the enrolment recommendation for the joining peer (202, 402, 500) at least based on a stored current topology of the P2P network, wherein the enrolment recommendation indicates at least one network position and at least one role the joining peer (202, 402, 500) shall have in the P2P network (200), said at least one role involving at least one of one or more processing tasks and one or more storing tasks,
- sending (2:9, 310, 5:7) attach information to the joining peer (202, 402, 500) according to the enrolment recommendation in response to the connect request, the attach information indicating, based on said at least one network position, where the joining peer (202, 402, 500) shall connect to the P2P network (200),
- sending configuration information to the joining peer (202, 402, 500) indicating said at least one role involving the at least one of said one or more processing tasks and the one or more storing tasks to be performed by the joining peer (202, 402, 500) in the P2P network (200), and
- updating (2:13, 316, 5:15) the configuration of the P2P network (200) based on the configuration information and the stored current topology of the P2P network (200) based on the attach information, when the joining peer (202, 402, 500) has connected to the P2P network (200).

2. The method according to claim 1, wherein the enrolment recommendation is further based on qualifications of the joining peer (202, 402, 500) including at least one of: a current context, capabilities, and a current status of the joining peer (202, 402, 500).

3. The method according to claim 1 or 2, wherein the enrolment recommendation is further based on at least one of: at least one of current roles and qualifications of other peers in the P2P network (200), load balancing, connection costs, latency, enrolment history, and social network information regarding the joining peer (202, 402, 500).

4. The method according to any of claims 1-3, wherein the at least one network position indicates one or more admitting peers (502) to which the joining peer (202, 402, 500) shall be connected in the P2P network (200).

5. The method according to claim 4, wherein the attach information further indicates a bootstrap peer (504) in the P2P network (200) which handles an attach procedure for the joining peer (202, 402, 500) when connecting to the one or more admitting peers (502) by relaying attach messages.

6. The method according to any of claims 1-5, wherein the enrolment recommendation further indicates one or more index keywords to be assigned to the joining peer (202, 402, 500) for use in service requests or queries to the P2P network (200) from outside parties.

7. The method according to any of claims 1-6, further comprising: receiving a leave request, from a peer in the P2P network (200), indicating that the peer is leaving the P2P network (200), and updating (2:13, 316, 5:15) the stored current topology of the P2P network (200) accordingly.

8. An arrangement in an enrolment server (204, 400, 506) configured to enroll a joining peer (202, 402, 500) to a peer-to-peer, P2P, network (200), the arrangement in the enrolment server (204, 400, 506) comprising:
- a communication module (400a) adapted to receive a connect request sent from the joining peer (202, 402, 500),
- a recommender service (206, 400d) adapted to calculate a level of performance, of a resulting topology and a configuration of the P2P network (200), for different roles for the joining peer (202, 402, 500),
- the recommender service (206, 400d) further adapted to create an enrolment recommendation for the joining peer (202, 402, 500) based on the calculation,
- an obtaining module (400b) adapted to obtain the enrolment recommendation for the joining peer (202, 402, 500) at least based on a stored current topology (404) of the P2P network, wherein the enrolment recommendation indicates at least one network position and at least one role the joining peer (202, 402, 500) shall have in the P2P network (200), said at least one role involving at least one of one or more processing tasks and the one or more storing tasks, and
- an updating module (400c) adapted to update the configuration of the P2P network (200) based on configuration information to be sent to the joining peer (202, 402, 500) and to update the stored current topology of the P2P network (200) based on attach information to be sent to the joining peer (202, 402, 500), when the joining peer (202, 402, 500) has connected to the P2P network (200),
wherein the communication module (400a) is further adapted to send the attach information to the joining peer (202, 402, 500) according to the enrolment recommendation in response to the connect request, the attach information indicating, based on said at least one network position, how the joining peer (202, 402, 500) shall connect to the P2P network (200), and wherein the communication module (400a) is further adapted to send the configuration information to the joining peer (202, 402, 500) indicating said at least one role involving the at least one of said one or more processing tasks and the one or more storing tasks to be performed by the joining peer (202, 402, 500) in the P2P network (200).

9. The arrangement according to claim 8, wherein the enrolment recommendation is further based on qualifications of the joining peer (202, 402, 500) including at least one of: a current context, capabilities, and a current status of the joining peer (202, 402, 500).

10. The arrangement according to any of claims 8 and 9, wherein the enrolment recommendation is further based on at least one of: at least one of current roles and qualifications of other peers in the P2P network (200), load balancing, connection costs, latency, enrolment history, and social network information regarding the joining peer (202, 402, 500).

11. The arrangement according to any of claims 8-10, wherein the at least one network position indicates one or more admitting peers (502) to which the joining peer (202, 402, 500) shall be connected in the P2P network (200).

12. The arrangement according to claim 11, wherein the attach information further indicates a bootstrap peer (504) in the P2P network (200) which handles an attach procedure for the joining peer (202, 402, 500) when connecting to the one or more admitting peers (502) by relaying attach messages.

13. The arrangement according to any of claims 8-12, wherein the enrolment recommendation further indicates one or more index keywords to be assigned to the joining peer (202, 402, 500) for use in service requests or queries to the P2P network (200) from outside parties.

14. The arrangement according to any of claims 8-13, wherein the enrolment server (204, 400, 506) is adapted to: receive a leave request, from a peer in the P2P network (200), indicating that the peer is leaving the P2P network (200), and update the stored current topology of the P2P network (200) accordingly.

## Patentansprüche

1. Verfahren zum Anmelden eines sich anschließenden Peers (202, 402, 500) zu einem Peer-to-Peer (P2P)-Netzwerk (200), das Verfahren umfassend die folgenden Handlungen, die durch einen Anmeldungsserver (204, 400, 506), der mit dem P2P-Netzwerk (200) assoziiert ist, ausgeführt werden:
- Empfangen (2:2, 300) einer Verbindungsaufforderung, die von dem sich anschließenden Peer (202, 402, 500) gesendet wird,
- Berechnen eines Niveaus von Leistung, einer resultierenden Topologie und einer Konfiguration des P2P-Netzwerks (200) für unterschiedliche Rollen für den sich anschließenden Peer (202, 402, 500),
- Erstellen (2:6, 5:6) einer Anmeldungsempfehlung für den sich anschließenden Peer (202, 402, 500) auf Grundlage der Berechnung,
- Erhalten (2:4-2:7, 308) der Anmeldungsempfehlung für den sich anschließenden Peer (202, 402, 500) zumindest auf Grundlage einer gespeicherten aktuellen Topologie des P2P-Netzwerks, wobei die Anmeldungsempfehlung zumindest eine Netzwerkposition und zumindest eine Rolle, die der sich anschließende Peer (202, 402, 500) in dem P2P-Netzwerk (200) haben soll, angibt, wobei die zumindest eine Rolle zumindest eine von einer oder mehreren Verarbeitungsaufgaben und einer oder mehreren Speicheraufgaben beinhaltet,
- Senden (2:9, 310, 5:7) von Zuordnungsinformationen an den sich anschließenden Peer (202, 402, 500) gemäß den Anmeldungsempfehlungen als Reaktion auf die Verbindungsaufforderung, wobei die Zuordnungsinformationen auf Grundlage der zumindest einen Netzwerkposition angeben, wo sich der sich anschließende Peer (202, 402, 500) mit dem P2P-Netzwerk (200) verbinden soll,
- Senden von Konfigurationsinformationen an den sich anschließenden Peer (202, 402, 500), die die zumindest eine Rolle angeben, die die zumindest eine aus der einen oder den mehreren Verarbeitungsaufgaben und der einen oder den mehreren Speicheraufgaben, die durch den sich anschließenden Peer (202, 402, 500) in dem P2P-Netzwerk (200) durchzuführen sind, beinhalten, und
- Aktualisieren (2:13, 316, 5:15) der Konfiguration des P2P-Netzwerks (200) auf Grundlage der Konfigurationsinformationen und der gespeicherten aktuellen Topologie des P2P-Netzwerks (200) auf Grundlage der Zuordnungsinformationen, wenn sich der sich anschließende Peer (202, 402, 500) mit dem P2P-Netzwerk (200) verbunden hat.

2. Verfahren nach Anspruch 1, wobei die Anmeldungsempfehlung ferner auf Qualifikationen des sich anschließenden Peers (202, 402, 500) basiert, beinhaltend zumindest eines der Folgenden: einen aktuellen Kontext, Fähigkeiten und einen aktuellen Status des sich anschließenden Peers (202, 402, 500).

3. Verfahren nach Anspruch 1 oder 2, wobei die Anmeldungsempfehlung ferner auf zumindest einem der Folgenden basiert: zumindest einer von aktuellen Rollen und Qualifikationen von anderen Peers in dem P2P-Netzwerk (200), Lastausgleich, Verbindungskosten, Latenz, Anmeldungsverlauf und Social-Network-Informationen in Bezug auf den sich anschließenden Peer (202, 402, 500).

4. Verfahren nach einem der Ansprüche 1-3, wobei die zumindest eine Netzwerkposition einen oder mehrere aufnehmende Peers (502) angibt, mit denen der sich anschließende Peer (202, 402, 500) in dem P2P-Netzwerk (200) verbunden werden soll.

5. Verfahren nach Anspruch 4, wobei die Zuordnungsinformationen ferner einen Bootstrap-Peer (504) in dem P2P-Netzwerk (200) angeben, der eine Zuordnungsprozedur für den sich anschließenden Peer (202, 402, 500) übernimmt, wenn sich mit dem einem oder den mehreren aufnehmenden Peers (502) verbunden wird, indem Zuordnungsmeldungen weitergegeben werden.

6. Verfahren nach einem der Ansprüche 1-5, wobei die Anmeldungsempfehlung ferner ein oder mehrere Indexschlüsselwörter angibt, die dem sich anschließenden Peer (202, 402, 500) zur Verwendung in Dienstaufforderungen oder - abfragen an das P2P-Netzwerk (200) von externen Stellen zuzuweisen sind.

7. Verfahren nach einem der Ansprüche 1-6, ferner Folgendes umfassend: Empfangen einer Verlassensaufforderung von einem Peer in dem P2P-Netzwerk (200), die angibt, dass der Peer das P2P-Netzwerk (200) verlässt, und entsprechendes Aktualisieren (2:13, 316, 5:15) der gespeicherten aktuellen Topologie des P2P-Netzwerks (200).

8. Anordnung auf einem Anmeldungsserver (204, 400, 506), dazu konfiguriert, einen sich anschließenden Peer (202, 402, 500) an einem Peer-to-Peer (P2P)-Netzwerk (200) anzumelden, wobei die Anordnung auf dem Anmeldungsserver (204, 400, 506) folgendes umfasst:
- ein Kommunikationsmodul (400a), das dazu angepasst ist, eine Verbindungsaufforderung, die von dem sich anschließenden Peer (202, 402, 500) gesendet wird, zu empfangen,
- einen Empfehlerdienst (206, 400d), der dazu angepasst ist, ein Niveau von Leistung, einer resultierenden Topologie und einer Konfiguration des P2P-Netzwerks (200) für unterschiedliche Rollen für den sich anschließenden Peer (202, 402, 500) zu berechnen,
- wobei der Empfehlerdienst (206, 400d) ferner dazu angepasst ist, eine Anmeldungsempfehlung für den sich anschließenden Peer (202, 402, 500) auf Grundlage der Berechnung zu erstellen,
- ein Erhaltungsmodul (400b), das dazu angepasst ist, die Anmeldungsempfehlung für den sich anschließenden Peer (202, 402, 500) zumindest auf Grundlage einer gespeicherten aktuellen Topologie (404) des P2P-Netzwerks zu erhalten, wobei die Anmeldungsempfehlung zumindest eine Netzwerkposition und zumindest eine Rolle, die der sich anschließende Peer (202, 402, 500) in dem P2P-Netzwerk (200) haben soll, angibt, wobei die zumindest eine Rolle zumindest eine von einer oder mehreren Verarbeitungsaufgaben und der einen oder mehreren Speicheraufgaben beinhaltet, und
- ein Aktualisierungsmodul (400c), das dazu angepasst ist, die Konfiguration des P2P-Netzwerks (200) auf Grundlage von Konfigurationsinformationen, die an den sich anschließenden Peer (202, 402, 500) zu senden sind, zu aktualisieren und die gespeicherte aktuelle Topologie des P2P-Netzwerks (200) auf Grundlage von Zuordnungsinformationen, die an den sich anschließenden Peer (202, 402, 500) zu senden sind, zu aktualisieren, wenn sich der sich anschließende Peer (202, 402, 500) mit dem P2P-Netzwerk (200) verbunden hat,
wobei das Kommunikationsmodul (400a) ferner dazu angepasst ist, die Zuordnungsinformationen an den sich anschließenden Peer (202, 402, 500) gemäß der Anmeldungsempfehlung als Reaktion auf die Verbindungsaufforderung zu senden, wobei die Zuordnungsinformationen auf Grundlage der zumindest einen Netzwerkposition angeben, wie sich der sich anschließende Peer (202, 402, 500) mit dem P2P-Netzwerk (200) verbinden soll, und wobei das Kommunikationsmodul (400a) ferner dazu angepasst ist, die Konfigurationsinformationen an den sich anschließenden Peer (202, 402, 500) zu senden, die die zumindest eine Rolle angeben, die die zumindest eine aus der einen oder den mehreren Verarbeitungsaufgaben und der einen oder den mehreren Speicheraufgaben, die durch den sich anschließenden Peer (202, 402, 500) in dem P2P-Netzwerk (200) durchzuführen sind, beinhalten.

9. Anordnung nach Anspruch 8, wobei die Anmeldungsempfehlung ferner auf Qualifikationen des sich anschließenden Peers (202, 402, 500) basiert, beinhaltend zumindest eines der Folgenden: einen aktuellen Kontext, Fähigkeiten und einen aktuellen Status des sich anschließenden Peers (202, 402, 500).

10. Anordnung nach einem der Ansprüche 8 und 9, wobei die Anmeldungsempfehlung ferner auf zumindest einem der Folgenden basiert: zumindest einer von aktuellen Rollen und Qualifikationen von anderen Peers in dem P2P-Netzwerk (200), Lastausgleich, Verbindungskosten, Latenz, Anmeldungsverlauf und Social-Network-Informationen in Bezug auf den sich anschließenden Peer (202, 402, 500).

11. Anordnung nach einem der Ansprüche 8-10, wobei die zumindest eine Netzwerkposition einen oder mehrere aufnehmende Peers (502) angibt, mit denen der sich anschließende Peer (202, 402, 500) in dem P2P-Netzwerk (200) verbunden werden soll.

12. Anordnung nach Anspruch 11, wobei die Zuordnungsinformationen ferner einen Bootstrap-Peer (504) in dem P2P-Netzwerk (200) angeben, der eine Zuordnungsprozedur für den sich anschließenden Peer (202, 402, 500) übernimmt, wenn sich mit dem einem oder den mehreren aufnehmenden Peers (502) verbunden wird, indem Zuordnungsmeldungen weitergegeben werden.

13. Anordnung nach einem der Ansprüche 8-12, wobei die Anmeldungsempfehlung ferner ein oder mehrere Indexschlüsselwörter angibt, die dem sich anschließenden Peer (202, 402, 500) zur Verwendung in Dienstaufforderungen oder - abfragen an das P2P-Netzwerk (200) von externen Stellen zuzuweisen sind.

14. Anordnung nach einem der Ansprüche 8-13, wobei der Anmeldungsserver (204, 400, 506) zu Folgendem angepasst ist: eine Verlassensaufforderung von einem Peer in dem P2P-Netzwerk (200) zu empfangen, die angibt, dass der Peer das P2P-Netzwerk (200) verlässt, und die gespeicherte aktuelle Topologie des P2P-Netzwerks (200) entsprechend zu aktualisieren.

## Revendications

1. Procédé d'admission d'un poste arrivant (202, 402, 500) à un réseau poste à poste, P2P, (200), le procédé comprenant les actions suivantes exécutées par un serveur d'admission (204, 400, 506) associé au réseau P2P (200) :
- la réception (2:2, 300) d'une requête de connexion envoyée à partir du poste arrivant (202, 402, 500),
- le calcul d'un niveau de performance, d'une topologie résultante et d'une configuration du réseau P2P (200), pour différents rôles pour le poste arrivant (202, 402, 500),
- la création (2:6, 5:6) d'une recommandation d'admission pour le poste arrivant (202, 402, 500) sur la base du calcul,
- l'obtention (2:4-2:7, 308) de la recommandation d'admission pour le poste arrivant (202, 402, 500) au moins sur la base d'une topologie actuelle stockée du réseau P2P, dans lequel la recommandation d'admission indique au moins une position de réseau et au moins un rôle que le poste arrivant (202, 402, 500) doit avoir dans le réseau P2P (200), ledit au moins un rôle impliquant au moins une parmi une ou plusieurs tâches de traitement et une ou plusieurs tâches de stockage,
- l'envoi (2:9, 310, 5:7) d'informations de rattachement au poste arrivant (202, 402, 500) en fonction de la recommandation d'admission en réponse à la requête de connexion, les informations de rattachement indiquant, sur la base de ladite au moins une position de réseau, où le poste arrivant (202, 402, 500) doit se connecter au réseau P2P (200),
- l'envoi d'informations de configuration au poste arrivant (202, 402, 500) indiquant ledit au moins un rôle impliquant l'au moins une parmi lesdites une ou plusieurs tâches de traitement et les une ou plusieurs tâches de stockage destinées à être effectuées le poste arrivant (202, 402, 500) dans le réseau P2P (200), et
- la mise à jour (2:13, 316, 5:15) de la configuration du réseau P2P (200) sur la base des informations de configuration et de la topologie actuelle stockée du réseau P2P (200) sur la base des informations de rattachement, quand le poste arrivant (202, 402, 500) s'est connecté au réseau P2P (200).

2. Procédé selon la revendication 1, dans lequel la recommandation d'admission est basée en outre sur des qualifications du poste arrivant (202, 402, 500) incluant au moins un parmi : un contexte actuel, des capacités et un état actuel du poste arrivant (202, 402, 500).

3. Procédé selon la revendication 1 ou 2, dans lequel la recommandation d'admission est basée en outre sur au moins un parmi : au moins un parmi des rôles actuels et des qualifications d'autres postes dans le réseau P2P (200), un équilibrage de charge, des coûts de connexion, une latence, un historique d'admission et des informations de réseaux sociaux concernant le poste arrivant (202, 402, 500).

4. Procédé selon l'une quelconque des revendications 1 à 3, dans lequel l'au moins une position de réseau indique un ou plusieurs postes accepteurs (502) auxquels le poste arrivant (202, 402, 500) doit être connecté dans le réseau P2P (200).

5. Procédé selon la revendication 4, dans lequel les informations de rattachement indiquent en outre un poste d'amorçage (504) dans le réseau P2P (200) qui gère une procédure de rattachement pour le poste arrivant (202, 402, 500) lors de la connexion aux un ou plusieurs postes acceptants (502) en retransmettant des messages de rattachement.

6. Procédé selon l'une quelconque des revendications 1 à 5, dans lequel la recommandation d'admission indique en outre un ou plusieurs mots-clés d'indice à attribuer au poste arrivant (202, 402, 500) pour l'utilisation dans des requêtes de service ou des interrogations pour le réseau P2P (200) en provenance de parties extérieures.

7. Procédé selon l'une quelconque des revendications 1 à 6, comprenant en outre : la réception d'une requête de départ, à partir d'un poste dans le réseau P2P (200), indiquant que le poste quitte le réseau P2P (200), et la mise à jour (2:13, 316, 5:15) de la topologie actuelle stockée du réseau P2P (200) en conséquence.

8. Agencement dans un serveur d'admission (204, 400, 506) configuré pour admettre un poste arrivant (202, 402, 500) à un réseau poste à poste, P2P, (200), l'agencement dans le serveur d'admission (204, 400, 506) comprenant :
- un module de communication (400a) adapté pour recevoir une requête de connexion envoyée à partir du poste arrivant (202, 402, 500),
- un service de recommandation (206, 400d) adapté pour calculer un niveau de performance, une topologie résultante et une configuration du réseau P2P (200), pour différents rôles pour le poste arrivant (202, 402, 500),
- le service de recommandation (206, 400d) étant adapté en outre pour créer une recommandation d'admission pour le poste arrivant (202, 402, 500) sur la base du calcul,
- un module d'obtention (400b) adapté pour obtenir la recommandation d'admission pour le poste arrivant (202, 402, 500) au moins sur la base d'une topologie actuelle stockée (404) du réseau P2P, dans lequel la recommandation d'admission indique au moins une position de réseau et au moins un rôle que le poste arrivant (202, 402, 500) doit avoir dans le réseau P2P (200), ledit au moins un rôle impliquant au moins une parmi une ou plusieurs tâches de traitement et les une ou plusieurs tâches de stockage, et
- un module de mise à jour (400c) adapté pour mettre à jour la configuration du réseau P2P (200) sur la base des informations de configuration à envoyer au poste arrivant (202, 402, 500) et pour mettre à jour la topologie actuelle stockée du réseau P2P (200) sur la base d'informations de rattachement à envoyer au poste arrivant (202, 402, 500), quand le poste arrivant (202, 402, 500) s'est connecté au réseau P2P (200),
dans lequel le module de communication (400a) est adapté en outre pour envoyer les informations de rattachement au poste arrivant (202, 402, 500) en fonction de la recommandation d'admission en réponse à la requête de connexion, les informations de rattachement indiquant, sur la base de ladite au moins une position de réseau, comment le poste arrivant (202, 402, 500) doit se connecter au réseau P2P (200), et dans lequel le module de communication (400a) est adapté en outre pour envoyer les informations de configuration au poste arrivant (202, 402, 500) indiquant ledit au moins un rôle impliquant l'au moins une parmi lesdites une ou plusieurs tâches de traitement et les une ou plusieurs tâches de stockage destinées à être effectuées le poste arrivant (202, 402, 500) dans le réseau P2P (200).

9. Agencement selon la revendication 8, dans lequel la recommandation d'admission est basée en outre sur des qualifications du poste arrivant (202, 402, 500) incluant au moins un parmi : un contexte actuel, des capacités et un état actuel du poste arrivant (202, 402, 500).

10. Agencement selon l'une quelconque des revendications 8 et 9, dans lequel la recommandation d'admission est basée en outre sur au moins un parmi : au moins un parmi des rôles actuels et des qualifications d'autres postes dans le réseau P2P (200), un équilibrage de charge, des coûts de connexion, une latence, un historique d'admission et des informations de réseaux sociaux concernant le poste arrivant (202, 402, 500).

11. Agencement selon l'une quelconque des revendications 8 à 10, dans lequel l'au moins une position de réseau indique un ou plusieurs postes accepteurs (502) auxquels le poste arrivant (202, 402, 500) doit être connecté dans le réseau P2P (200) .

12. Agencement selon la revendication 11, dans lequel les informations de rattachement indiquent en outre un poste d'amorçage (504) dans le réseau P2P (200) qui gère une procédure de rattachement pour le poste arrivant (202, 402, 500) lors de la connexion aux un ou plusieurs postes acceptants (502) en retransmettant des messages de rattachement.

13. Agencement selon l'une quelconque des revendications 8 à 12, dans lequel la recommandation d'admission indique en outre un ou plusieurs mots-clés d'indice à attribuer au poste arrivant (202, 402, 500) pour l'utilisation dans des requêtes de service ou des interrogations pour le réseau P2P (200) en provenance de parties extérieures.

14. Agencement selon l'une quelconque des revendications 8 à 13, dans lequel le serveur d'admission (204, 400, 506) est adapté pour : recevoir une requête de départ, à partir d'un poste dans le réseau P2P (200), indiquant que le poste quitte le réseau P2P (200), et la mise à jour de la topologie actuelle stockée du réseau P2P (200) en conséquence.
